(19) Europäisches Patentamt
European Patent Office
Office européen des brevets

(11) **EP 1 671 913 A2**

(12) **EUROPEAN PATENT APPLICATION**

(43) Date of publication:
**21.06.2006 Bulletin 2006/25**

(51) Int Cl.:
***B66B 7/06*** (2006.01)

(21) Application number: **06003726.4**

(22) Date of filing: **23.08.1999**

(84) Designated Contracting States:
**DE ES FR IT PT**

(30) Priority: **22.12.1998 US 218990**
**26.03.1999 US 277496**

(62) Document number(s) of the earlier application(s) in accordance with Art. 76 EPC:
**99973489.0 / 1 153 167**

(71) Applicant: **OTIS ELEVATOR COMPANY**
**Farmington, CT 06032-2568 (US)**

(72) Inventor: **The designation of the inventor has not yet been filed**

(74) Representative: **Klunker . Schmitt-Nilson . Hirsch**
**Winzererstrasse 106**
**80797 München (DE)**

Remarks:
This application was filed on 23 - 02 - 2006 as a divisional application to the application mentioned under INID code 62.

(54) **Tension member for an elevator**

(57)  A tension member (22) for an elevator system (12) has an aspect ratio of greater than one, where aspect ratio is defined as the ratio of tension member width w to thickness t (w/t). The increase in aspect ratio results in a reduction in the maximum rope pressure and an increased flexibility as compared to conventional elevator ropes. As a result, smaller sheaves may be used with this type of tension member (22). In a particular embodiment, the tension member includes a plurality of individual load carrying ropes (26), formed from metallic material encased within a common layer of coating. The coating layer (28) separates the individual ropes (26) and defines an engagement surface for engaging a traction sheave (24).

FIG.2

## Description

Technical Field

The present invention relates to elevator systems, and more particularly to tension members for such elevator systems.

Background of the Invention

A conventional traction elevator system includes a car, a counterweight, two or more ropes interconnecting the car and counterweight, a traction sheave to move the ropes, and a machine to rotate the traction sheave. The ropes are formed from laid or twisted steel wire and the sheave is formed from cast iron. The machine may be either a geared or gearless machine. A geared machine permits the use of higher speed motor, which is more compact and less costly, but requires additional maintenance and space.

Although conventional round steel ropes and cast iron sheaves have proven very reliable and cost effective, there are limitations on their use. One such limitation is the traction forces between the ropes and the sheave. These traction forces may be enhanced by increasing the wrap angle of the ropes or by undercutting the grooves in the sheave. Both techniques reduce the durability of the ropes, however, as a result of the increased wear (wrap angle) or the increased rope pressure (undercutting). Another method to increase the traction forces is to use liners formed from a synthetic material in the grooves of the sheave. The liners increase the coefficient of friction between the ropes and sheave while at the same time minimizing the wear of the ropes and sheave.

Another limitation on the use of round steel ropes is the flexibility and fatigue characteristics of round steel wire ropes. Elevator safety codes today require that each steel rope have a minimum diameter d ($d_{min}$=8 mm for CEN; $d_{min}$=9.5 mm (3/8") for ANSI) and that the D/d ratio for traction elevators be greater than or equal to forty (D/d≥40), where D is the diameter of the sheave. This results in the diameter D for the sheave being at least 320 mm (380 mm for ANSI). The larger the sheave diameter D, the greater torque required from the machine to drive the elevator system.

With the development of high tensile strength, lightweight synthetic fibers has come the suggestion to replace steel wire ropes in elevator systems with ropes having load carrying strands formed from synthetic fibers, such as aramid fibers. Recent publications making this suggestion include: U.S. Patent No. 4,022,010, issued to Gladdenbeck et al.; U.S. Patent No. 4,624,097 issued to Wilcox; U.S. Patent No. 4,887,422 issued to Klees et al.; and U.S. Patent No. 5,566,786 issued to De Angelis et al. The cited benefits of replacing steel fibers with aramid fibers are the improved tensile strength to weight ratio and improved flexibility of the aramid materials, along with the possibility of enhanced traction between the synthetic material of the rope and the sheave.

Another drawback of conventional round ropes is that the higher the rope pressure, the shorter the life of the rope. Rope pressure ($P_{rope}$) is generated as the rope travels over the sheave and is directly proportional to the tension (F) in the rope and inversely proportional to the sheave diameter D and the rope diameter d ($P_{rope} \approx F/(Dd)$). In addition, the shape of the sheave grooves, including such traction enhancing techniques as undercutting the sheave grooves, further increases the maximum rope pressure to which the rope is subjected.

Even though the flexibility characteristic of such synthetic fiber ropes may be used to reduce the required D/d ratio, and thereby the sheave diameter D, the ropes will still be exposed to significant rope pressure. The inverse relationship between sheave diameter D and rope pressure limits the reduction in sheave diameter D that can be attained with conventional ropes formed from aramid fibers. In addition, aramid fibers, although they have high tensile strength, are more susceptible to failure when subjected to transverse loads. Even with reductions in the D/d requirement, the resulting rope pressure may cause undue damage to the aramid fibers and reduce the durability of the ropes.

The above art notwithstanding, scientists and engineers under the direction of Applicants' Assignee are working to develop more efficient and durable methods and apparatus to drive elevator systems.

Disclosure of the Invention

According to the present invention, a tension member for an elevator has an aspect ratio of greater than one, where aspect ratio is defined as the ratio of tension member width w to thickness t (Aspect Ratio=w/t).

A principal feature of the present invention is the flatness of the tension member. The increase in aspect ratio results in a tension member that has an engagement surface, defined by the width dimension, that is optimized to distribute the rope pressure. Therefore, the maximum pressure is minimized within the tension member. In addition, by increasing the aspect ratio relative to a round rope, which has an aspect ratio equal to one, the thickness of the tension member may be reduced while maintaining a constant cross-sectional area of the tension member.

According further to the present invention, the tension member includes a plurality of individual load carrying cords encased within a common layer of coating. The coating layer separates the individual cords and defines an engagement surface for engaging a traction sheave.

As a result of the configuration of the tension member, the rope pressure may be distributed more uniformly throughout the tension member. As a result, the maximum rope pressure is significantly reduced as compared to a conventionally roped elevator having a similar load carrying capacity. Furthermore, the effective rope diameter 'd' (measured in the bending direction) is reduced for the equivalent load bearing capacity. Therefore, smaller values for the sheave diameter 'D' may be attained without a reduction in the D/d ratio. In addition, minimizing the diameter D of the sheave permits the use of less costly, more compact, high speed motors as the drive machine without the need for a gearbox.

In a particular embodiment of the present invention, the individual cords are formed from strands of non-metallic material, such as aramid fibers. By incorporating cords having the weight, strength, durability and, in particular, the flexibility characteristics of such materials into the tension member of the present invention, the acceptable traction sheave diameter may be further reduced while maintaining the maximum rope pressure within acceptable limits. As stated previously, smaller sheave diameters reduce the required torque of the machine driving the sheave and increase the rotational speed. Therefore, smaller and less costly machines may be used to drive the elevator system.

In another particular embodiment of the present invention, the individual cords are formed from strands of metallic material, such as steel. By incorporating cords having the flexibility characteristics of appropriately sized and constructed metallic materials into the tension member of the present invention, the acceptable traction sheave diameter may be minimized while maintaining the maximum rope pressure within acceptable limits.

The coating layer provides several advantages. First, the elastomeric coating layer provides for traction enhancement over the conventional steel ropes engaged with traction sheaves formed from cast iron or other metallic materials. Second, the coating layer seals the metallic cords to eliminate the need to continually apply and re-apply lubrication to the cords as is necessary in conventional steel ropes. Third, the coating layer fills the spaces between adjacent strands of the cords to avoid wire to wire contact. Such contact leads to fretting and degradation of the cords.

In addition, the coating layer provides a protective sheath around the load-carrying cords to prevent inadvertent damage from environmental factors, such as solvents or flame. This is particularly significant in the event of fire. For both non-metallic and metallic cords, the coating layer may be made from a flame retardant composition. The flame retardant coating layer will minimize the effects of fire the non-metallic cords, which may be sensitive to heat and fire. In addition, even though steel and other metallic cords are inherently flame retardant, having a flame retardant coating provides the additional benefit of avoiding a situation where loose burning coating layer material from the rope may cause peripheral damage within the hoistway. By making the coating layer flame retardant, the coating layer material is less likely to detach from the rope and less likely to cause peripheral damage.

As used herein, "flame retardant" means a material that is self extinguishing once the active flame is removed from the material. In a further particular embodiment of the present invention, a traction drive for an elevator system includes a tension member having an aspect ratio greater than one and a traction sheave having a traction surface configured to receive the tension member. The tension member includes an engagement surface defined by the width dimension of the tension member. The traction surface of the sheave and the engagement surface are complementarily contoured to provide traction and to guide the engagement between the tension member and the sheave. In an alternate configuration, the traction drive includes a plurality of tension members engaged with the sheave and the sheave includes a pair of rims disposed on opposite sides of the sheave and one or more dividers disposed between adjacent tension members. The pair of rims and dividers perform the function of guiding the tension member to prevent gross alignment problems in the event of slack rope conditions, etc.

In a still further embodiment, the traction surface of the sheave is defined by a material that optimizes the traction forces between the sheave and the tension member and minimizes the wear of the tension member. In one configuration, the traction surface is integral to a sheave liner that is disposed on the sheave. In another configuration, the traction surface is defined by a coating layer that is bonded to the traction sheave. In a still further configuration, the traction sheave is formed from the material that defines the traction surface.

Although described herein as primarily a traction device for use in an elevator application having a traction sheave, the tension member may be useful and have benefits in elevator applications that do not use a traction sheave to drive the tension member, such as indirectly roped elevator systems, linear motor driven elevator systems, or self-propelled elevators having a counterweight. In these applications, the reduced size of the sheave may be useful in order to reduce space requirements for the elevator system. The foregoing and other objects, features and advantages of the present invention become more apparent in light of the following detailed description of the exemplary embodiments thereof, as illustrated in the accompanying drawings.

Brief Description of the Drawings

Figure 1 is perspective view of an elevator system having a traction drive according to the present invention;
Figure 2 is a sectional, side view of the traction drive, showing a tension member and a sheave;
Figure 3 is a sectional, side view of an alternate embodiment showing a plurality of tension members;
Figure 4 is another alternate embodiment showing a traction sheave having a convex shape to center the tension member;

Figure 5 is a further alternate embodiment showing a traction sheave and tension member having complementary contours to enhance traction and to guide the engagement between the tension member and the sheave;

Figure 6a is a sectional view of the tension member; Figure 6b is a sectional view of an alternate embodiment of a tension member; Figure 6c is a sectional view of a further alternate embodiment of a tension member; and Figure 6d is a sectional view of a still further embodiment of a tension member.

Figure 7 is a magnified cross sectional view of a single cord of an alternate embodiment of the invention having six strands twisted around a central stand;

Figure 8 is a magnified cross sectional view of another alternate embodiment of a single cord of the invention; and

Figure 9 is a magnified cross sectional view of a still further alternate embodiment of the invention.

Best Mode for Carrying Out the Invention

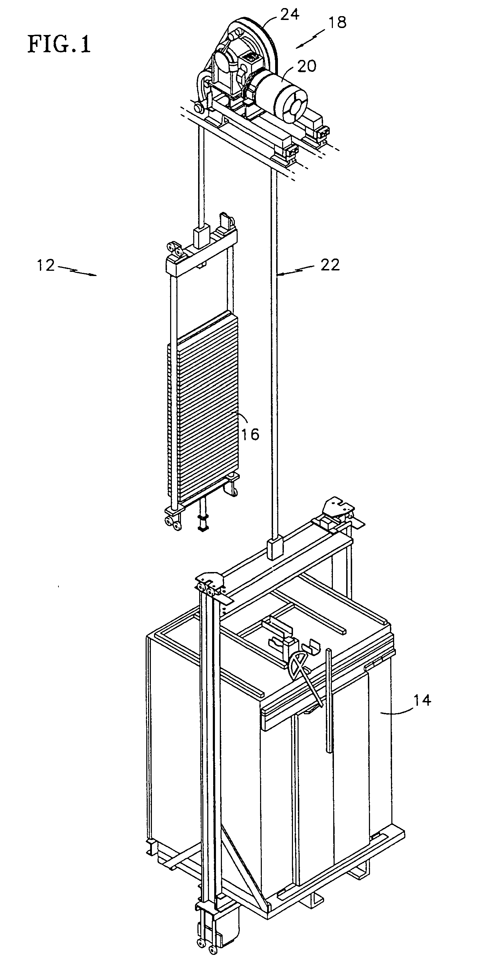

Illustrated in Figure 1 is a traction elevator system 12. The elevator system 12 includes a car 14, a counterweight 16, a traction drive 18, and a machine 20. The traction drive 18 includes a tension member 22, interconnecting the car 14 and counterweight 16, and a traction sheave 24. The tension member 22 is engaged with the sheave 24 such that rotation of the sheave 24 moves the tension member 22, and thereby the car 14 and counterweight 16. The machine 20 is engaged with the sheave 24 to rotate the sheave 24. Although shown as an geared machine 20, it should be noted that this configuration is for illustrative purposes only, and the present invention may be used with geared or gearless machines.

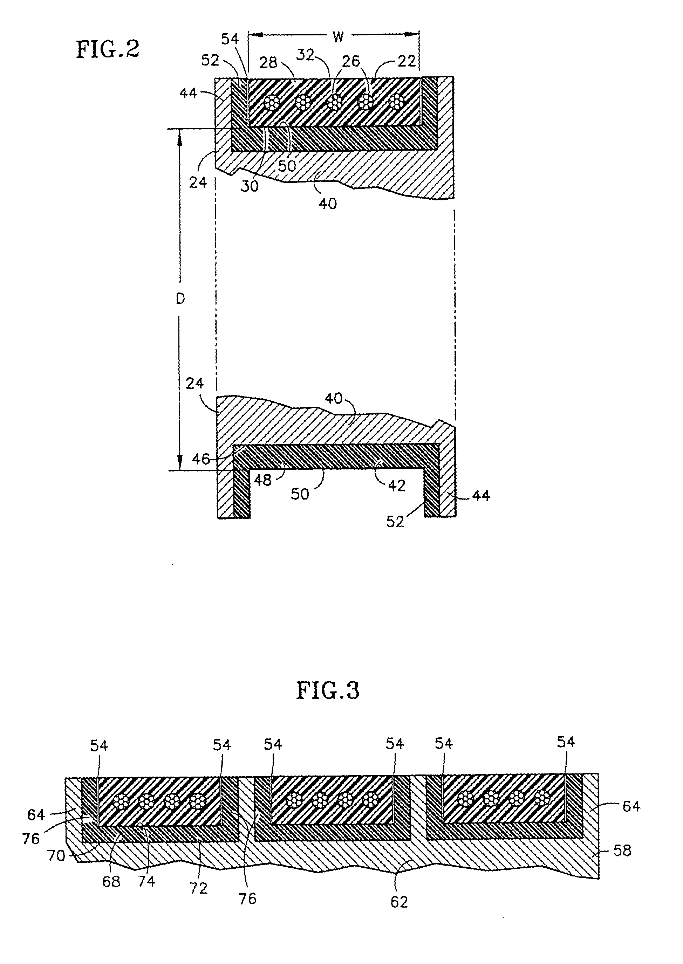

The tension member 22 and sheave 24 are illustrated in more detail in Figure 2. The tension member 22 is a single device that integrates a plurality of cords 26 within a common coating layer 28. Each of the ropes 26 is formed from laid or twisted strands of high strength synthetic, non-metallic fibers, such as commercially available aramid fibers. The cords 26 are equal length, are approximately equally spaced widthwise within the coating layer 28 and are arranged linearly along the width dimension. The coating layer 28 is formed from a polyurethane material, preferably a thermoplastic urethane, that is extruded onto and through the plurality of cords 26 in such a manner that each of the individual cords 26 is restrained against longitudinal movement relative to the other cords 26. Transparent material is an alternate embodiment which may be advantageous since it facilitates visual inspection of the flat rope. Structurally, of course, the color is irrelevant. Other materials may also be used for the coating layer 28 if they are sufficient to meet the required functions of the coating layer: traction, wear, transmission of traction loads to the cords 26 and resistance to environmental factors. It should further be understood that if other materials are used which do not meet or exceed the mechanical properties of a thermoplastic urethane, then the additional benefit of the invention of dramatically reducing sheave diameter may not be fully achievable. With the thermoplastic urethane mechanical properties the sheave diameter is reducible to 100 millimeters or less. The coating layer 28 defines an engagement surface 30 that is in contact with a corresponding surface of the traction sheave 24.

As shown more clearly in Figure 6a, the tension member 22 has a width w, measured laterally relative to the length of the tension member 22, and a thickness t1, measured in the direction of bending of the tension member 22 about the sheave 24. Each of the cords 26 has a diameter d and are spaced apart by a distance s. In addition, the thickness of the coating layer 28 between the cords 26 and the engagement surface 30 is defined as t2 and between the cords 26 and the opposite surface is defined as t3, such that $t1=t2+t3+d$.

The overall dimensions of the tension member 22 results in a cross-section having an aspect ratio of much greater than one, where aspect ratio is defined as the ratio of width w to thickness t1 or (Aspect Ratio=w/t1). An aspect ratio of one corresponds to a circular cross-section, such as that common in conventional round ropes. The higher the aspect ratio, the more flat the tension member 22 is in cross-section. Flattening out the tension member 22 minimizes the thickness t1 and maximizes the width w of the tension member 22 without sacrificing cross-sectional area or load carrying capacity. This configuration results in distributing the rope pressure across the width of the tension member 22 and reduces the maximum rope pressure relative to a round rope of comparable cross-sectional area and load carrying capacity. As shown in Figure 2, for the tension member 22 having five individual cords 26 disposed within the coating layer 28, the aspect ratio is greater than five. Although shown as having an aspect ratio greater than five, it is believed that benefits will result from tension members having aspect ratios greater than one, and particularly for aspect ratios greater than two.

The separation s between adjacent cords 26 is dependant upon the materials and manufacturing processes used in the tension member 22 and the distribution of rope stress across the tension member 22. For weight considerations, it is desirable to minimize the spacing s between adjacent cords 26, thereby reducing the amount of coating material between the cords 26. Taking into account rope stress distribution, however, may limit how close the cords 26 may be to each other in order to avoid excessive stress in the coating layer 28 between adjacent cords 26. Based on these considerations, the spacing may be optimized for the particular load carrying requirements.

The thickness t2 of the coating layer 28 is dependant upon the rope stress distribution and the wear characteristics of the coating layer 28 material. As before, it is desirable to avoid excessive stress in the coating layer 28 while providing sufficient material to maximize the expected life of the tension member 22.

The thickness t3 of the coating layer 28 is dependant upon the use of the tension member 22. As illustrated in Figure 1, the tension member 22 travels over a single sheave 24 and therefore the top surface 32 does not engage the sheave 24. In this application, the thickness t3 may be very thin, although it must be sufficient to withstand the strain as the tension member 22 travels over the sheave 24. It may also be desirable to groove the tension member surface 32 to reduce tension in the thickness t3. On the other hand, a thickness t3 equivalent to that of t2 may be required if the tension member 22 is used in an elevator system that requires reverse bending of the tension member 22 about a second sheave. In this application, both the upper 32 and lower surface 30 of the tension member 22 is an engagement surface and subject to the same requirement of wear and stress.

The diameter d of the individual cords 26 and the number of cords 26 is dependent upon the specific application. It is desirable to maintain the thickness d as small as possible, as hereinbefore discussed, in order to maximize the flexibility and minimize the stress in the cords 26.

Although illustrated in Figure 2 as having a plurality of round ropes 26 embedded within the coating layer 28, other styles of individual ropes may be used with the tension member 22, including those that have aspect ratios greater than one, for reasons of cost, durability or ease of fabrication. Examples include oval shaped ropes 34 (Figure 6b), flat or rectangular shaped ropes 36 (Figure 6c), or a single flat rope 38 distributed through the width of the tension member 22 as shown in Figure 6d. An advantage of the embodiment of Figure 6d is that the distribution of rope pressure may be more uniform and therefore the maximum rope pressure within the tension member 22 may be less than in the other configurations. Since the ropes are encapsulated within a coating layer, and since the coating layer defines the engagement surface, the actual shape of the ropes is less significant for traction and may be optimized for other purposes.

In another preferred embodiment, each of the cords 26 is formed from preferably seven twisted strands, each made up of seven twisted metallic wires. In a preferred embodiment of this configuration of the invention, a high carbon steel is employed. The steel is preferably cold drawn and galvanized for the recognized properties of strength and corrosion resistance of such processes. The coating layer is preferably a polyurethane material that is ether based and includes a fire retardant composition. The flame retardant characteristic may be achieved by selecting a coating layer material that is inherently flame retardant or using an additive to the coating layer material to make it flame retardant. Examples of such additives include phosphoric esters, melamines and halogens.

In a preferred embodiment incorporating steel cords, referring to Figure 6, each strand 27 of a cord 26 comprises seven wires with six of the wires 29 twisted around a center wire 31. Each cord 26, comprises one strand 27a which is centrally located and six additional outer strands 27b that are twisted around the central strand 27a. Preferably, the twisting pattern of the individual wires 29 that form the central strand 27a are twisted in one direction around central wire 31 of central strand 27a while the wires 29 of outer strands 27b are twisted around the central wire 31 of the outer strands 27b in the opposite direction. Outer strands 27b are twisted around central strand 27a in the same direction as the wires 29 are twisted around center wire 31 in strand 27a. For example, the individual strands in one embodiment comprise the central wire 31, in center strand 27a, with the six twisted wires 29 twisting clockwise; the wires 29 in the outer strands 27b twisting counterclockwise around their individual center wires 31 while at the cord 26 level the outer strands 27b twist around the central strand 27a in the clockwise direction. The directions of twisting improve the characteristics of load sharing in all of the wires of the cord.

It is important to the success of this embodiment of the invention to employ wire 29 of a very small size. Each wire 29 and 31 are less than .25 millimeters in diameter and preferably in the range of about 10 millimeters to .20 millimeters in diameter. In a particular embodiment, the wires are of a diameter of 175 millimeters in diameter. The small sizes of the wires preferably employed contribute to the benefit of the use of a sheave of smaller diameter. The smaller diameter wire can withstand the bending radius of a smaller diameter sheave (around 100 millimeters in diameter) without placing too much stress on the strands of the flat rope. Because of the incorporation of a plurality of small cords 26, preferably about 1.6 millimeters in total diameter in this particular embodiment of the invention, into the flat rope elastomer, the pressure on each cord is significantly diminished over prior art ropes. Cord pressure is decreased at least as $n^{-1/2}$ with n being the number of parallel cords in the flat rope, for a given load and wire cross section.

In an alternate embodiment of the configuration incorporating cords formed from metallic materials, referring to Figure 8, the center wire 35 of the center strand 37a of each cord 26 employs a larger diameter. For example, if the wires 29 of the previous embodiment (.175 millimeters) are employed, the center wire 35 of the center strand only of all cords would be about .20- .22 millimeters in diameter. The effect of such a center wire diameter change is to reduce contact between wires 29 surrounding wire 35 as well as to reduce contact between strands 37b which are twisted around strand 37a. In such an embodiment the diameter of cord 26 will be slightly greater than the previous example of 1.6 millimeters.

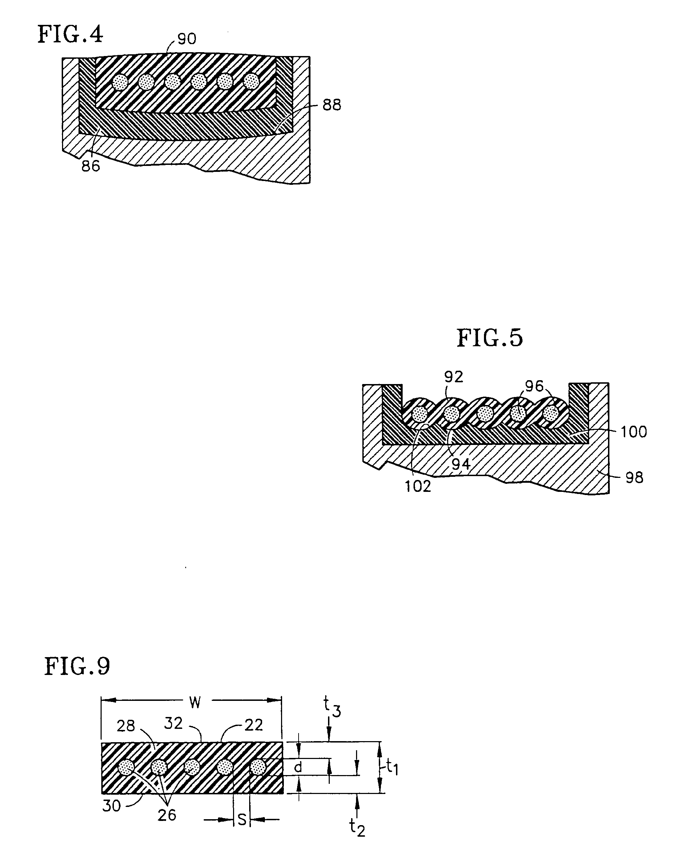

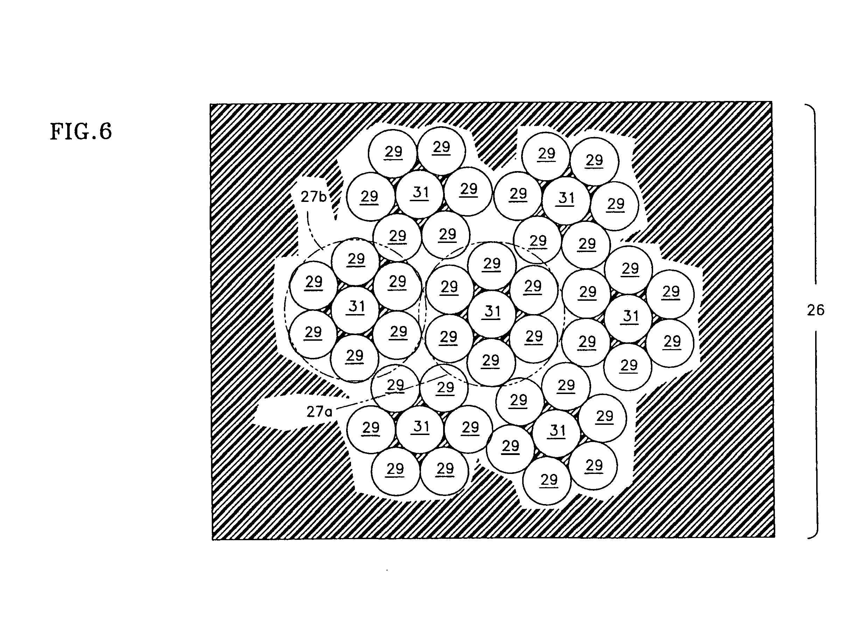

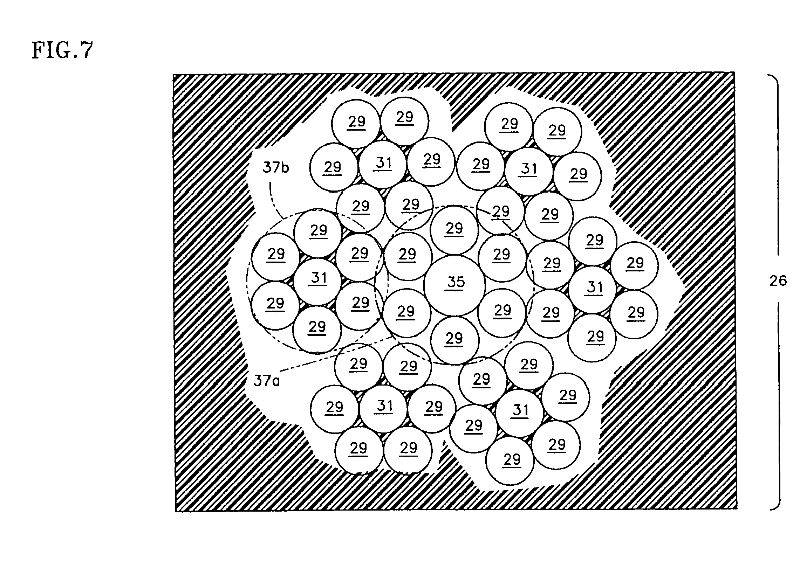

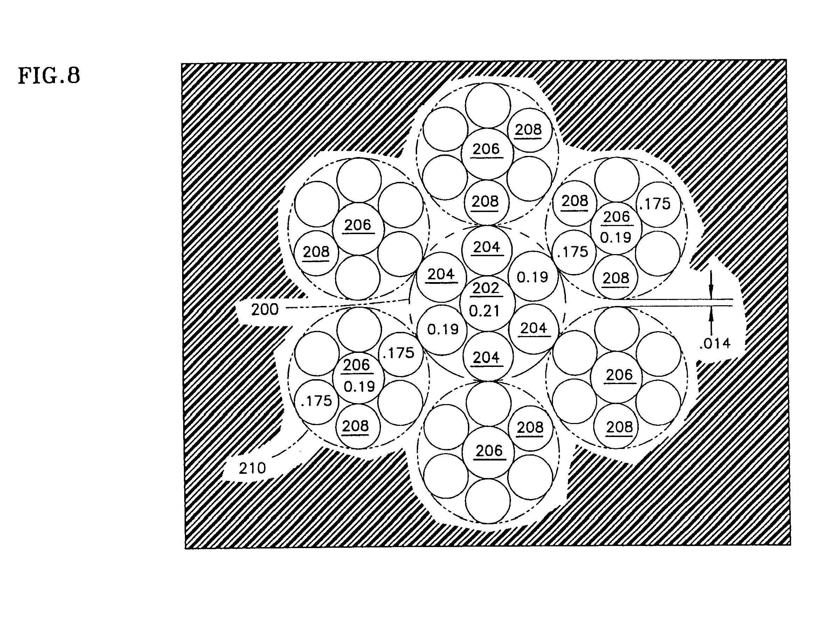

In a third embodiment of the configuration incorporating cords formed from metallic materials, referring to Figure 9, the concept of the embodiment of Figure 8 is expanded to further reduce wire-to-wire and strand-to-strand contact. Three distinct sizes of wires are employed to construct the cords of the invention. In this embodiment the largest wire is the center wire 202 in the center strand 200. The intermediate diameter wires 204 are located around the center wire 202 of center strand 200 and therefore makeup a part of center strand 200. This intermediate diameter wire 204 is also the center wire 206 for all outer strands 210. The smallest diameter wires employed are numbered 208. These wrap each wire 206 in each outer strand 210. All of the wires in the embodiment are still less than .25 mm in diameter. In a representative embodiment, wires 202 may be 0.21 mm; wires 204 may be 0.19 mm; wires 206 may be 0.19 mm; and wires 208 may be 0.175 mm. It will be appreciated that in this embodiment wires 204 and 206 are of equivalent diameters and are numbered individually to provide locational information only. It is noted that the invention is not limited by wires 204 and 206 being identical in diameter. All of the diameters of wires provided are for example only and could be rearranged with the joining principle being that contact among the outer wires of the central strand is reduced; that contact among the outer wires of the outer strands is reduced and that contact among the outer strands is reduced. In the example provided, (only for purpose of example) the space obtained between the outer wires of outer strands is .014 mm. It should be noted that the space between wires is filled with the coating layer material during the process of applying the coating layer to the cords. As a result, the coating layer contributes to the reduction of wire to wire contact.

Referring back to Figure 2, the traction sheave 24 includes a base 40 and a liner 42. The base 40 is formed from cast iron and includes a pair of rims 44 disposed on opposite sides of the sheave 24 to form a groove 46. The liner 42 includes a base 48 having a traction surface 50 and a pair of flanges 52 that are supported by the rims 44 of the sheave 24. The liner 42 is formed from a polyurethane material, such as that described in commonly owned US Patent No. 5,112,933. or any other suitable material providing the desired traction with the engagement surface 30 of the coating layer 28 and wear characteristics. Within the traction drive 18, it is desired that the sheave liner 42 wear rather than the sheave 24 or the tension member 22 due to the cost associated with replacing the tension member 22 or sheave 24. As such, the liner 42 performs the function of a sacrificial layer in the traction drive 18. The liner 42 is retained, either by bonding or any other conventional method, within the groove 46 and defines the traction surface 50 for receiving the tension member 22. The traction surface 50 has a diameter D. Engagement between the traction surface 50 and the engagement surface 30 provides the traction for driving the elevator system 12. The diameter of a sheave for use with the tension member described hereinabove is dramatically reduced from prior art sheave diameters. More particularly, sheaves to be employed with the flat rope of the invention may be reduced in diameter to 100 mm or less. As will be immediately recognized by those skilled in the art, such a diameter reduction of the sheave allows for the employment of a much smaller machine. In fact, machine sizes may fall to ¼ of their conventional size in for example low rise gearless applications for a typical 8 passenger duty elevators. This is because torque requirements would be cut to about ¼ with a 100 mm sheave and the rpm of the motor would be increased. Cost for the machines indicated accordingly falls.

Although illustrated as having a liner 42, it should be apparent to those skilled in the art that the tension member 22 may be used with a sheave not having a liner 42. As an alternative, the liner 42 may be replaced by coating the sheave with a layer of a selected material, such as polyurethane, or the sheave may be formed or molded from an appropriate synthetic material. These alternatives may prove cost effective if it is determined that, due to the diminished size of the sheave, it may be less expensive to simply replace the entire sheave rather than replacing sheave liners.

The shape of the sheave 24 and liner 42 defines a space 54 into which the tension member 22 is received. The rims 44 and the flanges 52 of the liner 42 provide a boundary on the engagement between the tension member 22 and the sheave 24 and guide the engagement to avoid the tension member 22 becoming disengaged from the sheave 24.

An alternate embodiment of the traction drive 18 is illustrated in Figure 3. In this embodiment, the traction drive 18 includes three tension members 56 and a traction sheave 58. Each of the tension members 56 is similar in configuration to the tension member 22 described above with respect to Figures 1 and 2. The traction sheave 58 includes a base 62, a pair of rims 64 disposed on opposite side of the sheave 58, a pair of dividers 66, and three liners 68. The dividers 66 are laterally spaced from the rims 64 and from each other to define three grooves 70 that receive the liners 68. As with the liner 42 described with respect to Figure 2, each liner 68 includes a base 72 that defines a traction surface 74 to receive one of the tension members 56 and a pair of flanges 76 that abut the rims 64 or dividers 66. Also as in Figure 2, the liner 42 is wide enough to allow a space 54 to exist between the edges of the tension member and the flanges 76 of the liner 42.

Alternative construction for the traction drive 18 are illustrated in Figures 4 and 5. Figure 4 illustrates a sheave 86 having a convex shaped traction surface 88. The shape of the traction surface 88 urges the flat tension member 90 to remain centered during operation. Figure 5 illustrates a tension member 92 having a contoured engagement surface 94 that is defined by the encapsulated cords 96. The traction sheave 98 includes a liner 100 that has a traction surface 102 that is contoured to complement the contour of the tension member 92. The complementary configuration provides guidance to the tension member 92 during engagement and, in addition, increases the traction forces between the tension member 92 and the traction sheave 98.

Use of tension members and traction drives according to the present invention may result in significant reductions in maximum rope pressure, with corresponding reductions in sheave diameter and torque requirements. The reduction in maximum rope pressure results from the cross-sectional area of the tension member having an aspect ratio of greater than one. For this configuration, assuming that the tension member is such as that shown in Figure 6d, the calculation for approximate maximum rope pressure is determined as follows:

$$P_{max} \cong (2F/Dw)$$

Where F is the maximum tension in the tension member. For the other configurations of Figure 6a-c, the maximum rope pressure would be approximately the same although slightly higher due to the discreteness of the individual ropes. For a round rope within a round groove, the calculation of maximum rope pressure is determined as follows:

$$P_{max} \cong (2F/Dd)(4/\pi)$$

The factor of $(4/\pi)$ results in an increase of at least 27% in maximum rope pressure, assuming that the diameters and tension levels are comparable. More significantly, the width w is much larger than the cord diameter d, which results in greatly reduced maximum rope pressure. If the conventional rope grooves are undercut, the maximum rope pressure is even greater and therefore greater relative reductions in the maximum rope pressure may be achieved using a flat tension member configuration. Another advantage of the tension member according to the present invention is that the thickness t1 of the tension member may be much smaller than the diameter d of equivalent load carrying capacity round ropes. This enhances the flexibility of the tension member as compared to conventional ropes.

Although the invention has been shown and described with respect to exemplary embodiments thereof, it should be understood by those skilled in the art that various changes, omissions, and additions may be made thereto, without departing from the spirit and scope of the invention.

**Claims**

1. A tension member for providing lifting force to a car of an elevator system, the tension member being engageable with a rotatable sheave of the elevator system, the tension member having a load carrying cord encased within a coating layer, wherein the load carrying cord is formed from a metallic material and the coating layer is formed from a non-metallic material.

2. The tension member according to Claim 1, further including a plurality of spaced metallic cords, and wherein the coating layer encapsulates the plurality of spaced metallic cords.

3. The tension member according to Claim 1, wherein the coating layer is flame retardant.

4. The tension member according to Claim 1, wherein each cord is formed from a plurality of wires in a manner to produce spaces between adjacent wires, and wherein the coating layer fills the spaces.

5. A tension member for providing lifting force to a car of an elevator system, the tension member having a width w, a thickness t measured in the bending direction, and an engagement surface defined by the width dimension of the tension member, wherein the tension member has a aspect ratio, defined as the ratio of width w relative to thickness t, greater than one, the tension member including a plurality of individual load carrying cords encased within a common layer of coating, and wherein the coating layer is flame retardant.

FIG.1

FIG.2

FIG.3

FIG.4

90

88

86

FIG.5

92   96

100

94

102   98

FIG.9

W

28   32   22

$t_3$

d   $t_1$

30

26

S

$t_2$

FIG.6

FIG.7

FIG.8